# EUROPÄISCHE PATENTSCHRIFT

(11) **EP 2 643 941 B1**
(45) Veröffentlichungstag und Bekanntmachung des Hinweises auf die Patenterteilung: **07.03.2018**
(21) Anmeldenummer: 11771109.3
(22) Anmeldetag: 14.10.2011
(51) Int. Cl.: H04L 25/38, H04L 1/16, H04L 25/02

(54) **KOMMUNIKATIONSSYSTEM MIT RÜCKKANAL REALISIERT DURCH PEGELVERSCHIEBUNG AUF DER DATENLEITUNG**
COMMUNICATION SYSTEM HAVING A RETURN CHANNEL IMPLEMENTED BY LEVEL SHIFTING ON THE DATA LINE
SYSTÈME DE COMMUNICATION À CANAL RETOUR RÉALISÉ PAR DÉCALAGE DE NIVEAU SUR LA LIGNE DE DONNÉES

(30) Priorität: 23.11.2010 DE 102010061771
(43) Veröffentlichungstag der Anmeldung: 02.10.2013
(73) Patentinhaber: SEG Automotive Germany GmbH, 70499 Stuttgart (DE)
(72) Erfinder: SCHUELER, Harald, 71522 Backnang (DE); ROESSLE, Markus, 70199 Stuttgart (DE)
(74) Vertreter: Steinbauer, Florian
(86) Internationale Anmeldenummer: PCT/EP2011/067960
(87) Internationale Veröffentlichungsnummer: WO 2012/069254

(56) Entgegenhaltungen:
- DE-A1- 19 724 716
- DE-T2- 3 751 608
- DE-T2- 3 852 143

## Beschreibung

### Stand der Technik

Die Erfindung bezieht sich auf ein Kommunikationssystem mit einem Sender und einem Empfänger mit jeweils einer unidirektionalen Schnittstelle und einer zwischen Sender und Empfänger verbindbaren unidirektionalen Übertragungsleitung, wobei der Empfänger eine Prüf- und Auswerteschaltung umfasst und der Sender eine Sende- und eine Diagnoseeinrichtung umfasst. Die Erfindung bezieht sich auch auf ein Verfahren zum Betreiben eines Kommunikationssystems mit einem Sender und einem Empfänger, wobei der Sender und der Empfänger jeweils eine unidirektionale Schnittstelle aufweisen und zwischen diesen Schnittstellen eine unidirektionale angeordnet ist und zumindest von dem Sender mittels einer sendereigenen Diagnoseeinrichtung jeweils eine Selbstdiagnose ausgeführt wird. Die Erfindung bezieht sich auch auf ein Computerprogrammprodukt.

Eine unidirektionale Signalübermittlung zwischen einem Sender und einem Empfänger zur Steuergerätekommunikation ist bekannt. Es werden logische Signale unter Verwendung zweier Pegel auf einer Übertragungsstrecke eingesetzt.

Die DE 199 330 38 A1 beschreibt ein Verfahren und eine Vorrichtung zur Übertragung eines Starter-Ansteuersignals von einer Motorsteuerung an den Starter eines Fahrzeugs. Um EMV-Störungen und modulierte HF-Einstrahlungen auszuschließen, wird ein asynchrones, ein wechselndes oder ein nicht-symmetrisches Frequenz-Ansteuersignal übertragen.

DE 38 52 143 T2 offenbart einen Sender und einen Empfänger, die mittels einer Abfolge von High- und Low-Pegeln seriell auf einer Datenleitung kommunizieren. Der Empfänger verfügt über ein Transistorschalter, über den er den Pegel auf der Datenleitung auf Low-Pegel setzen kann, um dem Sender fehlerfreien Empfang zu quittieren, was der Sender erkennen kann.

Es ist Aufgabe der Erfindung ein Kommunikationssystem, ein Verfahren zum Betreiben des Kommunikationssystems und ein Computerprogrammprodukt der eingangs genannten Art derart weiterzubilden, dass möglichst einfach und kostengünstig der Sender vom Empfänger Informationen in der Gegenrichtung einer unidirektionalen Signalübermittlung erhält.

### Offenbarung der Erfindung

Erfindungsgemäß wird die Aufgabe durch den Gegenstand der Patentansprüche 1, 7 und 9 gelöst. Die abhängigen Ansprüche definieren bevorzugte Weiterbildungen der Erfindung.

Es ist ein Gedanke der Erfindung, einen vorhandenen Sender und einen Empfänger mit möglichst wenig Änderungen der Bauteile so zu konfigurieren, dass eine Rückmeldung des Empfängers an den Sender übermittelt werden kann, insbesondere mit der Information, ob der Empfänger Signale aufnehmen und verarbeiten kann oder ob ein Fehler am Empfänger vorliegt. Dabei ist es ein Gedanke der Erfindung, die vorhandene unidirektionale Schnittstelle mit einer zusätzlichen Funktion auszustatten und somit die unidirektionale Übertragungsleitung mit einer Funktion einer bidirektionalen Übertragungsleitung zu erweitern. Vorteil ist hierfür, dass eine weitere Schnittstelle zwischen Sender und Empfänger vermieden wird und somit weiterer Bauteil- und zusätzlicher Kostenaufwand vermieden wird. Ferner sind zusätzliche Schnittstellenbauelemente nicht erforderlich. Ein möglicher Zeitverzug durch eine weitere Schnittstelle und eine Übertragungsleitung wird somit auch vermieden.

Die Aufgabe wird durch ein Kommunikationssystem dadurch gelöst, dass von der Sendeeinrichtung des Senders sendbare Signale von einer Mitteilungseinrichtung des Empfängers als Sendeinformation des Empfängers veränderbar sind und an der senderseitigen Schnittstelle von einer Detektoreinrichtung des Senders detektierbar sind. Somit werden die vorhandenen Signale des Senders lediglich vom Empfänger bei Bedarf einer Informationsübermittlung an den Sender, das heißt für eine Rückkopplung, gegebenenfalls verändert, um somit Informationen vom Empfänger in die Gegenrichtung zu leiten. Bevorzugt wird der Zustand des Empfängers an den Sender mittels der Mitteilungseinrichtung übermittelt.

Gemäß einer weiter bevorzugten Ausführungsform, um weitere Bauteile zu ersparen, ist die Detektoreinrichtung des Senders eine bereits vorhandene Diagnoseeinrichtung des Senders, die zur Selbstdiagnose im Sender bereits vorgesehen ist. Die vorhandene Diagnoseeinrichtung erhält erfindungsgemäß eine weitere Funktion einer Empfangseinrichtung im Sender.

Gemäß einer bevorzugten Ausführungsform, um möglichst einfach die Mitteilungseinrichtung des Empfängers auszubilden, umfasst diese einen Schalter entweder als Schließer oder Öffner und insbesondere auf der Seite eines Referenzpotentials oder auf der Seite einer Masse. Somit lässt sich ein Signal, das entweder mit einem Hoch- oder einem Niedrigpegel gesendet wird, durch die Mitteilungseinrichtung über den Schalter verändern. Durch Öffnen oder Schließen des Schalters wird das Signal verändert, was die Diagnoseeinrichtung erfasst und interpretiert.

Die Überwachung der Schnittstelle im Sender erfolgt standardmäßig über die Diagnoseeinrichtung der Endstufe im Sender. Dabei sind standardmäßig viele Fehlerfälle wie beispielsweise "Lastabfall", "Kurzschluss nach Referenzspannung" und "Kurzschluss nach Masse" zu unterscheiden. Zur Unterscheidung dieser Diagnosen ist eine Überwachung des Pegels auf der Übertragungsleitung notwendig. Die Mitteilungseinrichtung ist somit eine zusätzliche Beschaltung der Schnittstelle auf der Empfängerseite. Es lässt sich dadurch ein Ruhepegel bzw. ein Ansteuerpegel auf der Übertragungsleitung der Übertragungsleitung dahin verändern, dass durch die standardmäßig eingesetzte Diagnoseeinrichtung auf der Senderseite durch Einführen einer neue Funktion, Funktionsfehler auf der Empfängerseite festgestellt werden können. Somit kann der Empfänger dem Sender mitteilen, dass die übertragenen Signale nicht empfangen, nicht interpretiert oder nicht umgesetzt werden konnten oder weitere Informationen übermitteln. Bei dem erfindungsgemäßen Kommunikationssystem werden Informationen unter Verwendung mindestens zweier Pegel, einem Referenzspannungs-Pegel und einem Massepotential-Pegel auf der Übertragungsleitung als logische Signale übermittelt. Die Übertragungsleitung kann kabelgeführt oder kabellos ausgebildet sein.

Bevorzugt, um Fehler von anderen Signalen am Sender zu unterscheiden, umfasst die Mitteilungseinrichtung des Empfängers einen Widerstand. Somit wird ein Mittelpegel generiert, der am Sender von der Detektoreinrichtung detektierbar ist.

Gemäß einer die Erfindung weiterbildenden Ausführungsform, um noch besser Fehler von anderen Signalen am Sender unterscheidbar zu machen, um diese zu detektieren, umfasst der Sender und/oder der Empfänger eine erste- oder eine zweite Einstelleinrichtung, die insbesondere als Widerstand ausgebildet sind, zur Einstellung eines Hochpegels oder eines Niedrig- oder eines Mittelpegels.

Um eindeutig einen "Kurzschluss nach Referenzspannung" bzw. "Kurzschluss nach Masse" deutlich unterscheidbar zu machen, umfasst vorzugsweise der Sender und/oder der Empfänger eine dritte Einstelleinrichtung, insbesondere in Form eines Widerstands zur Einstellung eines Zwischen-Pegels oder eines Mittelpegels. Somit kann eindeutig durch eine Veränderung des Mittelpegels eine Information übertragbar sein. Hierfür ist eine analoge Messvorrichtung auf der Senderseite notwendig.

Um eine Information vom Empfänger an den Sender zu übermitteln, sind die vom Sender gesendeten Signale dadurch veränderbar, dass die Mitteilungseinrichtung des Empfängers und insbesondere die Sendeeinrichtung jeweils einen Schalter zum Schalten auf eine Referenzspannung und/oder auf ein Referenzmassepotential umfasst. Der Schalter der Sendeeinrichtung generiert Informationssignale und die Mitteilungseinrichtung verändert diese gegebenenfalls, falls Informationen an den Sender übermittelt werden sollen.

Die Aufgabe wird durch ein Verfahren zum Betreiben eines oben beschriebenen Kommunikationssystems dadurch gelöst, dass bei einer Informationsübermittlung vom Sender auf den Empfänger von einer Mitteilungseinrichtung des Empfängers die Informationsübermittlung verändert wird, von einer Detektoreinrichtung des Senders die veränderte Information detektiert wird und daraus eine entsprechende Interpretation von einer Auswertevorrichtung des Senders abgeleitet wird. Bevorzugt ist die Detektoreinrichtung die bereits vorhandene Diagnoseeinrichtung des Senders, die somit lediglich eine zusätzliche Funktion bzw. neue Funktion erhält. Diese Funktion kann beispielsweise durch einen anwendungsspezifischen Chip, einem ASIC, oder durch einen kleinen Mikrocomputer mit Mikroprozessor und Programmspeicher implementiert sein. Somit kann dieser auch die Auswertevorrichtung übernehmen.

Gemäß einem weiter bevorzugten Verfahren wird die Information vom Sender von der Zustandsübermittlungseinrichtung des Empfängers von einem "Hoch"-Pegel auf einen "Niedrig"-, insbesondere von einen "Zwischen"-Pegel, verändert. Oder weiter bevorzugt wird umgekehrt von einem Niedrig-Pegel auf einen Hoch- bzw. Zwischenpegel die Information von der Zustandsübermittlungseinrichtung verändert.

Die Aufgabe wird auch durch ein Computerprogrammprodukt gelöst, das in einen Programmspeicher mit Programmbefehlen ladbar ist, um alle Schritte eines unbeschriebenen Verfahrens auszuführen, insbesondere wenn das Computerprogrammprodukt von einem oben beschriebenen Kommunikationssystem ausgeführt wird. Dabei ist der Mikrocomputer Bestandteil des Senders und/oder des Empfängers. Das Computerprogrammprodukt hat den Vorteil, dass es keine oder wenige zusätzliche Bauteile erfordert und sich als Modul in einem bereits vorhandenen Empfänger bzw. Sender implementieren lässt. Ferner lässt es sich leicht an Verbesserungen oder Optimierungen einzelner Verfahrensschritte mit geringem Aufwand kostengünstig anpassen.

Ein möglicher Einsatz der Erfindung ist im Zusammenhang mit der Ansteuerung einer Elektronik für eine elektrische Maschine, insbesondere eines Starters in einem Start-Stopp-System eines Fahrzeugs mittels einer Steuereinrichtung oder eines Steuergeräts gegeben, wobei die Steuereinrichtung Ansteuersignale an die elektronischen Bauelemente der Elektronik, beispielsweise MOSFETs abgibt und diese z.B. ein oder aus schaltet.

### Kurze Beschreibung der Zeichnungen

Die Erfindung wird im Folgenden unter Bezugnahme auf Zeichnungen näher erläutert. Es zeigen:
- Fig. 1: einen schematischen Schaltplan eines erfindungsgemäßen Kommunikationssystems gemäß einer ersten Ausführungsform,
- Fig. 2: ein schematisches Flussdiagramm vom Ablauf eines erfindungsgemäßen Verfahrens,
- Fig. 3: einen schematischen Schaltplan eines erfindungsgemäßen Kommunikationssystems gemäß einer zweiten Ausführungsform,
- Fig. 4: einen schematischen Schaltplan eines erfindungsgemäßen Kommunikationssystems gemäß einer dritten Ausführungsform,
- Fig. 5: einen schematischen Schaltplan eines erfindungsgemäßen Kommunikationssystems gemäß einer vierten Ausführungsform,
- Fig. 6: einen schematischen Schaltplan eines erfindungsgemäßen Kommunikationssystems gemäß einer fünften Ausführungsform und
- Fig. 7: einen schematischen Schaltplan eines erfindungsgemäßen Kommunikationssystems gemäß einer sechsten Ausführungsform.

### Ausführungsformen der Erfindung

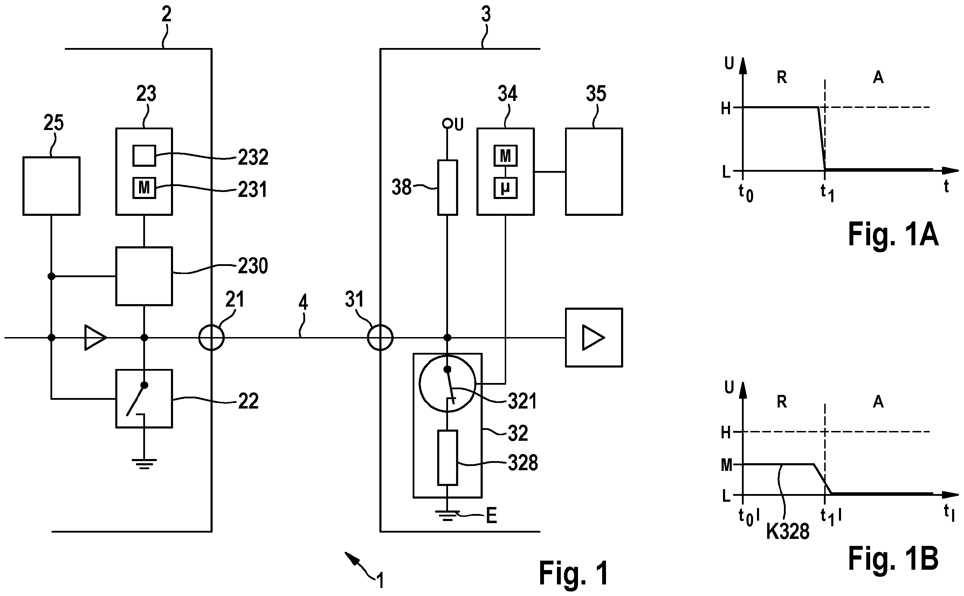

Die Fig. 1 zeigt vereinfacht einen Schaltplan eines erfindungsgemäßen Kommunikationssystems 1 mit einem Sender 2 und einem Empfänger 3, die jeweils eine unidirektionale Schnittstelle 21 bzw. 31 aufweisen. Die unidirektionale Schnittstelle 21, 31 kann ein oder mehradrig sein. Die unidirektionalen Schnittstellen 21, 31 sind mit einer Übertragungsleitung 4 verbunden. Der Sender 2 umfasst eine Steuereinrichtung 25, die eine Diagnoseeinrichtung 23 bevorzugt mit einem Mikrocomputer 321 und einem Programmspeicher 232 umfasst. Die Steuereinrichtung 25 steuert eine Sendeeinrichtung 22 an, um Informationen in Form von Signalen an den Empfänger 3 zu übermitteln. Die Signale werden mit Hilfe von Pegelzuständen über die Zeit t übermittelt. Zur Erzeugung dieser Pegelzustände umfasst die Sendeeinrichtung 22 einen Schalter, der elektronisch ansteuerbar ist. Der Schalter der Sendeeinrichtung 22 ist gemäß der Fig. 1 masseseitig angeordnet.

Auf der Empfängerseite ist eine Prüf- und Auswerteschaltung 34 angeordnet, die die vom Sender 2 empfangenen Signale auswertet, und dementsprechend einen Aktor, beispielsweise eine elektrische Maschine über eine Steuerung 35 ansteuert. Die Prüf- und Auswerteschaltung 34 umfasst ferner eine Diagnoseeinrichtung des Empfängers 3, die detektiert, ob der Empfänger 3 die übertragenen Signale richtig empfangen hat, richtig interpretiert oder umgesetzt werden können bzw. konnten. Im Fall einer Fehlermeldung steuert die Prüf- und Auswerteschaltung 34 eine Mitteilungseinrichtung 32 an. Die Mitteilungseinrichtung 32 umfasst einen Schalter 321, der gemäß der Fig. 1 auf Seite der Masse E bezüglich der Übertragungsleitung 4 geschaltet ist und somit die Signale von dem Sender 2 verändern kann, wenn eine Information vom Empfänger 3 in die Gegenrichtung der unidirektionalen Steuergerätekommunikation übermittelt werden soll, beispielsweise, dass der Empfänger 3 nicht arbeitet bzw. Funktionsstörungen aufweist. Auf Seite des Potentials U ist im Empfänger 3 eine Einrichtung in Form eines Widerstands 38 angeordnet, um einen "Hoch"-Pegel für die Signalübermittlung einzustellen.

Optional ist eine Einstelleinrichtung an der Mitteilungseinrichtung 32 in Form eines weiteren Widerstands 328 angeordnet, um einen Mittelpegel U zu erzeugen. Somit ist ein fehlerhafter Zustand des Empfängers 3 auf der Seite des Senders 2 besser detektierbar. Der Sender 2 hat hierfür eine Detektoreinrichtung 230, die auf analoge Weise verschiedene Pegel von der Übertragungsleitung 4 aufnehmen kann und weiterverarbeitet an die Diagnoseeinrichtung 23 übermitteln kann. Ein Erfindungsgedanke ist somit die Hinzufügung der Mitteilungseinrichtung 32, wobei hier der Schalter 321 als sogenannter "logischer Öffner" fungiert, das heißt im ordnungsgemäßen, einwandfreiem Zustand des Empfängers 3 ist der Schalter 321 offen. Ist der Empfänger aus irgendwelchen Gründen nicht in einem einsatzbereiten oder nicht in einem ordnungsgemäß funktionstüchtigem Zustand, so wird der Schalter 321, wie in der Fig. 1 gezeigt, geschlossen.

Die Fig. 1A zeigt ein Zeit-Potential-Diagramm einer Signalübermittlung vom Sender 2 mit einem Empfänger 3 beim Übergang von einem Ruhezustand R in einen angesteuerten Zustand A gegenüber der Zeit t. Dabei ist der Schalter 321 offen. Im Ruhezustand ist der Schalter der Sendeeinrichtung 22 offen und somit ist im Ruhezustand ein Hochpotential H detektierbar. Zum Zeitpunkt t₁ wird der Schalter der Sendeeinrichtung 22 geschlossen. In diesem Fall wird der Pegel auf Niedrig gesetzt, um ein Ansteuersignal an den Empfänger 3 zu übermitteln.

Die Fig. 1B zeigt im Gegensatz dazu den Fehlerfall an, wenn der Schalter 321 geschlossen ist. In einem solchen Fall ist der Pegel zum Zeitpunkt t₀ₗ niedrig und zum Schaltzeitpunkt t₁ₗ bleibt er auch niedrig. Somit lässt sich über die Detektoreinrichtung 230 feststellen, dass der Empfänger 3 zum Zeitpunkt t₀ₗ bis t₁ₗ nicht im ordnungsgemäßen Zustand ist. Gegebenenfalls kann eine entsprechende Interpretation durch die Diagnoseeinrichtung 23 ausgewertet werden. Optional umfasst die Mitteilungseinrichtung 32 den Widerstand 328. Die Kennlinie K328 mit gestrichelter Linie ist hierfür in der Fig. 1B eingezeichnet. Der Widerstand 328 erzeugt somit einen Mittelpegel M zwischen dem Hoch- und dem Niedrig-Pegel. Somit ist ein Fehlerfall deutlich beispielsweise von einem Kurzschluss unterscheidbar.

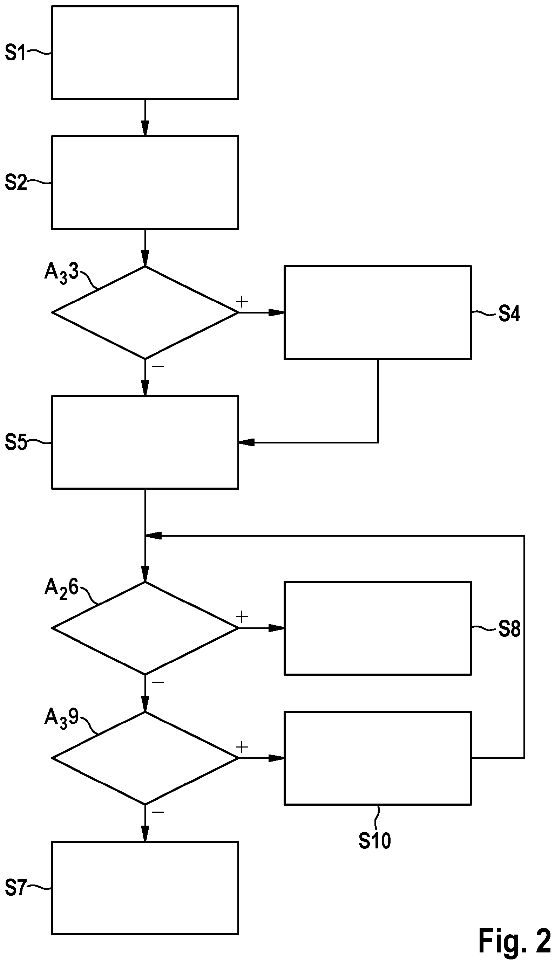

Die Fig. 2 zeigt ein Flussdiagramm eines erfindungsgemäßen Verfahrens wie es in dem Kommunikationssystem 1 abläuft.

In einem ersten Schritt S1 wird der Sender 2 und der Empfänger 3 aktiviert.

In einem folgenden Schritt S2 startet der Sender 2 und der Empfänger 3 jeweils mit einer eigenen Zustandsdiagnose.

In einem Abfrageschritt A₃3 prüft die Prüf- und Auswerteschaltung 34 des Empfängers 3, ob ein fehlerhafter Zustand im Empfänger vorliegt. Ein Fehler liegt vor, wenn die Signale nicht empfangen, nicht interpretiert oder nicht umgesetzt werden konnten. Ist dies nicht der Fall, so wird die Mitteilungseinrichtung 32 nicht angesteuert.

Liegt ein Fehler vor, wird im Schritt S4 die Mitteilungseinrichtung angesteuert, sodass eine Mitteilung über einen negativen Zustand des Empfängers 3 an den Sender 2 übermittelbar ist. Der Verfahrensablauf geht nach beiden Schritten zu Schritt S5 über, egal ob positiv oder negativ die Abfrage A3 durchgeführt ist.

In einem Schritt S5 werden Ansteuerdaten in Form von Signalen vom Sender 2 an den Empfänger 3 übermittelt.

Die Signale sind abhängig vom Abfrageschritt A₃3 und vom Schritt S4 entweder verändert oder unverändert. Sind die Signale verändert, so wird in ihrem Abfrageschritt A₂6 von der Diagnoseeinrichtung 23 im Sender 2 dies detektiert und dementsprechend entweder im Schritt S7 bzw. S8 dementsprechend die Ansteuerung des Empfängers 3 mittels der Steuerung 25 angepasst.

In einem weiteren Abfrageschritt A₃9, der dem Abfrageschritt A6 folgt, überprüft die Prüf- und Auswerteschaltung 34, ob die Signale fehlerhaft beim Empfänger 3 angekommen sind. Einen fehlerhaften Fall teilt der Empfänger 3 über eine Mitteilung mittels der Mitteilungseinrichtung 32 im Schritt S10 dies dem Sender 2 mit. Es folgt ein Rücksprung des Verfahrens zu Abfrageschritt A₂6.

Sind die Signale fehlerfrei im Empfänger 3 angekommen, so folgt der Schritt S7. Im Schritt S7 bleibt das Kommunikationssystem weiter aktiv.

Im Schritt S8 wird aufgrund eines in Abfrageschritt A₂6 detektierten Fehlers entweder das Kommunikationssystem 1 inaktiv oder es werden entsprechende Folgerungen im Sender 2 aufgrund der Fehler abgeleitet. Von der Diagnoseeinrichtung 23 werden die Mitteilungen über die Veränderung der Signale auf der Übertragungsleitung 4 detektiert und interpretiert.

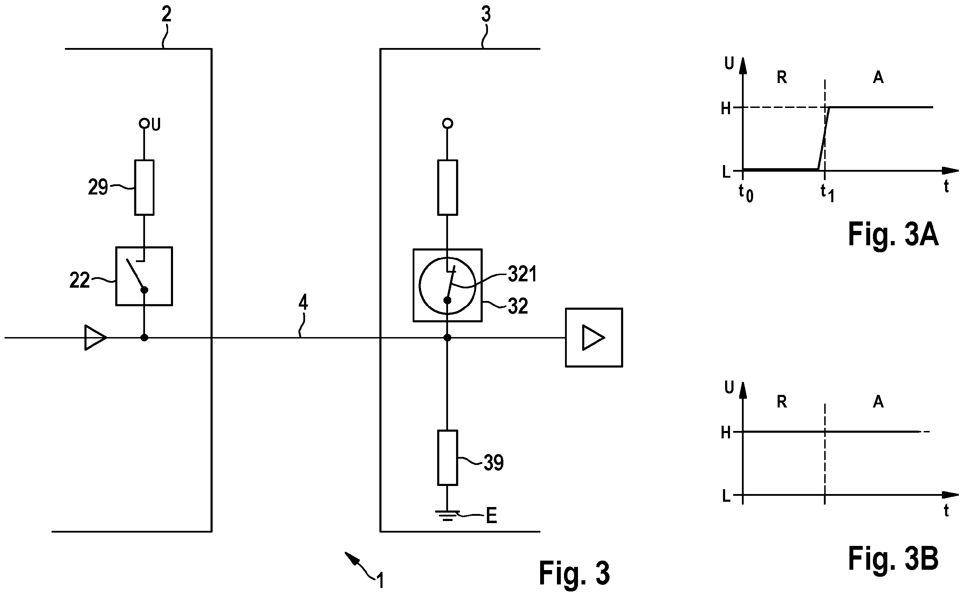

Die Fig. 3 zeigt eine alternative Ausführungsform zur Fig. 1. Der Unterschied bei dieser Ausführungsform ist, dass die Sendeeinrichtung 22 in dem Sender 2 die Übertragungsleitung 4 mit einer Referenzspannung U beaufschlagt. Ein Widerstand 39 masseseitig im Empfänger 3 angeordnet dient zur Einstellung eines Niedrig-Pegels. Auf der Senderseite ist potentialseitig ein Widerstand 29 angeordnet, der zur Einstellung eines Hoch-Pegels dient.

Wie in der Fig. 3A gezeigt ist, ist in einem Zeit-Potential-Diagramm im Ruhezustand R das Potential, in der Übertragungsleitung 4 niedrig "L" und nach einem Schließen des Schalters der Sendeeinrichtung 22 wird zum Zeitpunkt t₁ der Pegel auf ein hohes Potential H gehoben. Die Mitteilungseinrichtung 32 mit dem Schalter 321, der auch hier als logischer Öffner fungiert ist dabei offen.

Die Figur 3B zeigt mit einem Zeit-Potential-Diagramm den Zustand an, wenn ein Fehler detektiert worden ist und der Schalter 321 geschlossen ist. In einem solchen Fall ist sowohl im Ruhe- als auch im angesteuerten Zustand ein Hoch-Potential-Pegel H von der Detektoreinrichtung 23 an der Übertragungsleitung 4 erfassbar.

Optional kann zusätzlich ein Widerstand auf der Beschaltungsstrecke im Empfänger 3 eingefügt werden, was nicht dargestellt ist, wodurch der Ruhepegel R zu einem Mittelpegel verändert wird. Damit wird dieser Fehlerfall eindeutig von "Kurzschluss nach Referenzspannung" unterscheidbar.

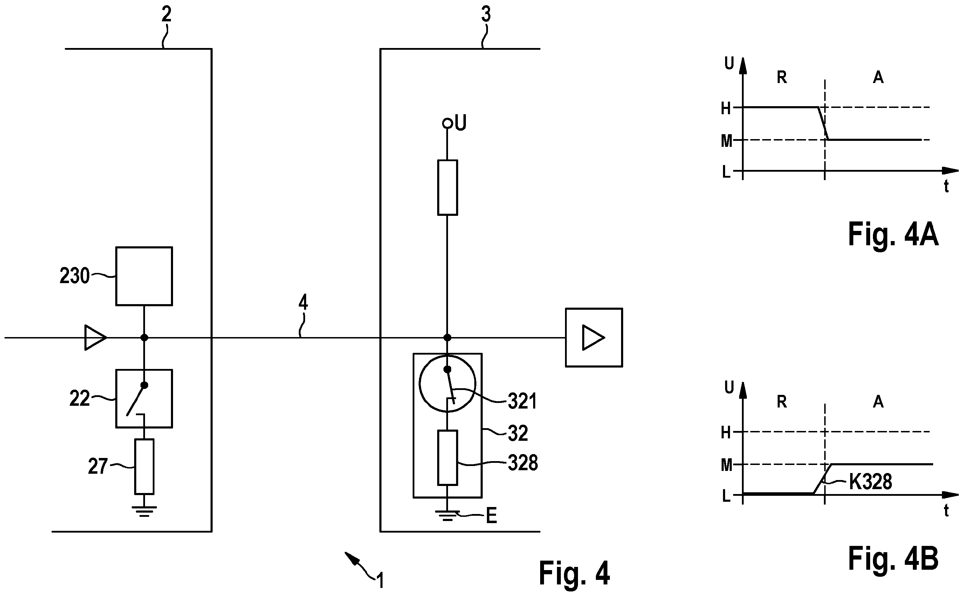

Die Fig. 4 zeigt einen schematischen Schaltplan eines erfindungsgemäßen Kommunikationssystems mit einer Variante zur Ausführungsform gemäß der Fig. 1. Hier ist auf einer Beschaltungsstrecke im Sender 2 eine weitere Einstelleinrichtung in der Form eines Widerstands 27 angeordnet, sodass sich wie in der Fig. 4A in einem Zeit-Potential-Diagramm dargstellt, ein Zwischenpegel M im angesteuerten Zustand A ergibt. Erfindungsgemäß ist die Mitteilungseinrichtung 32 als zusätzliche Beschaltung der Übertragungsstrecke im Empfänger 2 nach Masse E geschaltet.

Ist ein Fehler detektiert worden, und ist der Schalter 321 geschlossen worden, so verändert die Mitteilungseinrichtung 32 den Ruhepegel R zu einen "Niedrig"-Pegel "L", wie in der Fig. 4B gezeigt ist.. Wenn optional der Widerstand 328 in der Beschaltungsstrecke im Empfänger 3 eingefügt wird, verändert sich der Ruhepegel zu einem Mittelpegel M, wie er durch eine gestrichelte Linie K328 dargestellt ist. Somit ist dieser Fehlerfall eindeutig von einem "Kurzschluss nach Masse" unterscheidbar. Für die Erkennung des Mittelpegels M ist auf der Senderseite 2 eine analoge Messeinrichtung als Detektoreinrichtung 230 vorgesehen.

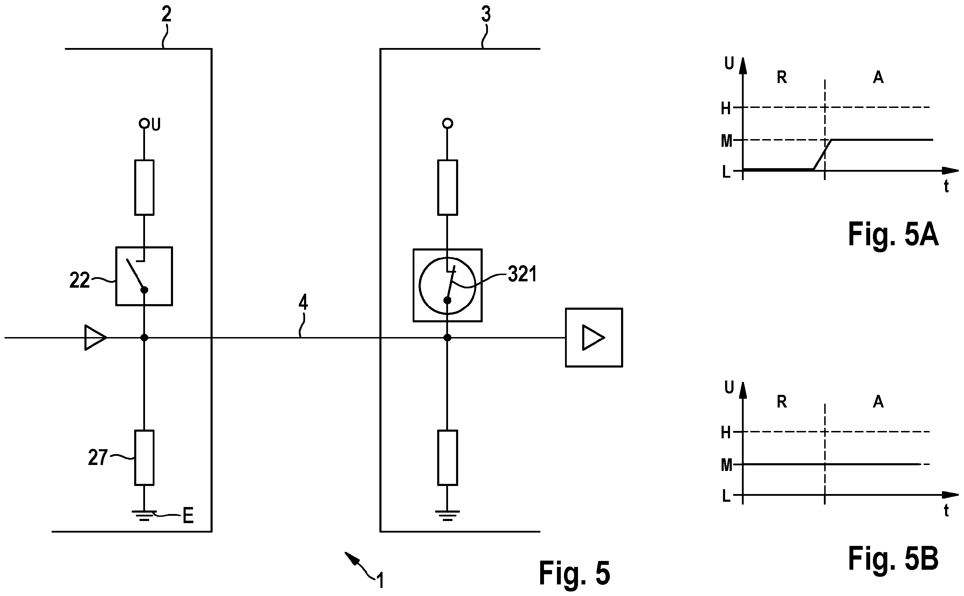

Die Fig. 5 zeigt eine weitere Variante der Ausführungsform gemäß der Fig. 3. Hier ist zusätzlich ein Widerstand 27 im Sender 2 nach Masse E geschaltet, sodass ein Mittelpegel M einstellbar ist.

Im Ruhefall R ist der Ruhepegel auf der Übertragungsleitung 4 gemäß der Fig. 5A auf "niedrig" "L" eingestellt und im angesteuerten Zustand A ist der Pegel auf Mittel M.

Die Fig. 5B zeigt ein Zeit-Potential-Diagramm gemäß der Fig. 3B mit dem Unterschied, dass der Ruhe- und der Ansteuerpegel R, A aufgrund des logischen Öffners 321 auf Mittelpotential M liegt, somit kann ein Fehlerfall eindeutig von einem Kurzschluss nach der Referenzspannung U unterscheidbar sein.

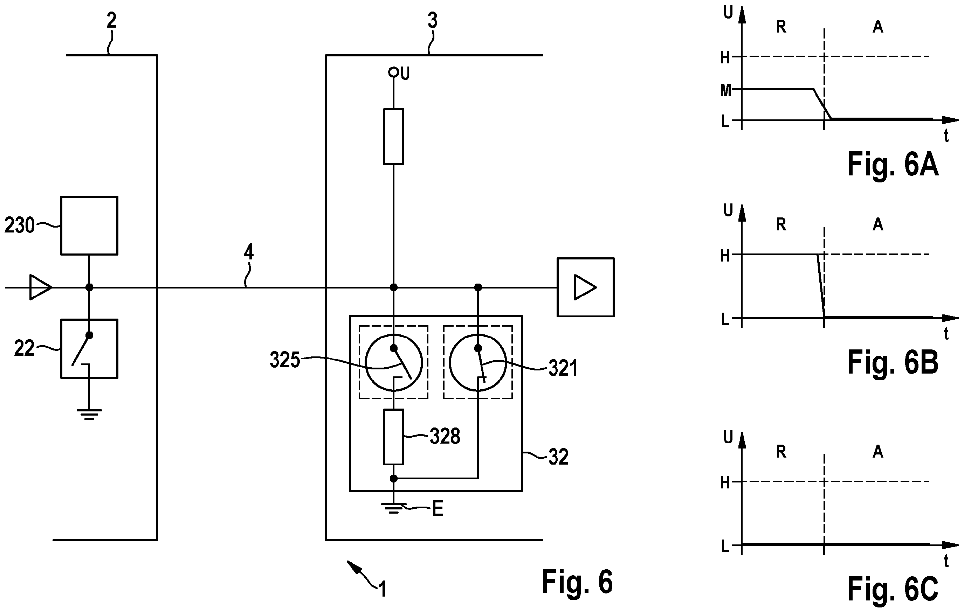

Fig. 6 zeigt eine weitere fünfte alternative Ausführungsform des erfindungsgemäßen Kommunikationssystems 1 mit einem Aufbau gemäß der Fig. 1. Der Unterschied besteht darin, dass im Empfänger 3 eine zusätzliche Beschaltung der Mitteilungseinrichtung 32 einen Strompfad umfasst, wobei ein Schalter ein logischer Schließer 325 ist. Der logische Schließer ist über einen optionalen Widerstand nach Masse angeordnet. Es ergibt sich somit im Zeit-Potential-Diagramm gemäß der Fig. 6A, dass im Ruhezustand ein Mittelpegel M sich einstellt und im angesteuerten Zustand A ein Niedrig-Pegel L. Wird der logische Schließer 325 auf der Masseverbindung im Empfänger 2 geöffnet, so stellt sich ein Kennlinienverlauf gemäß der Fig. 6B ein. Das heißt, im Ruhezustand R ist ein Hoch-Pegel H detektierbar und im angesteuerten Zustand A der Niedrig-Pegel L.

Alternativ ist eine direkte Beschaltung nach Masse E über einen logischen Öffner 321, wie in der Fig. 1 realisiert. Hier zeigt die Fig. 6C das Zeit-Potential-Kennliniendiagramm, dass sowohl in der Ruhelage R als auch im angesteuerten Zustand A an der Übertragungsleitung 4 ein niedriges Potential detektierbar ist. Optional kann zusätzlich ein Widerstand auf der Beschaltungsstrecke im Empfänger 3 eingefügt sein, wodurch der Ruhepegel zu mittel verändert wird. Damit wird dieser Fehlerfall eindeutig von einem "Kurzschluss nach Masse" oder "Kurzschluss nach Referenzspannung" unterscheidbar. Dabei ist der Widerstand so zu dimensionieren, sodass sich der Pegel auf der Übertragungsleitung 4 eindeutig von dem "Mittel"-Pegel im Ruhezustand unterscheiden lässt. Diese Option ist nicht dargstellt. Wie oben bereits erläutert, ist auf der Senderseite 2 eine analoge Messeinrichtung 230 als Detektoreinrichtung notwendig.

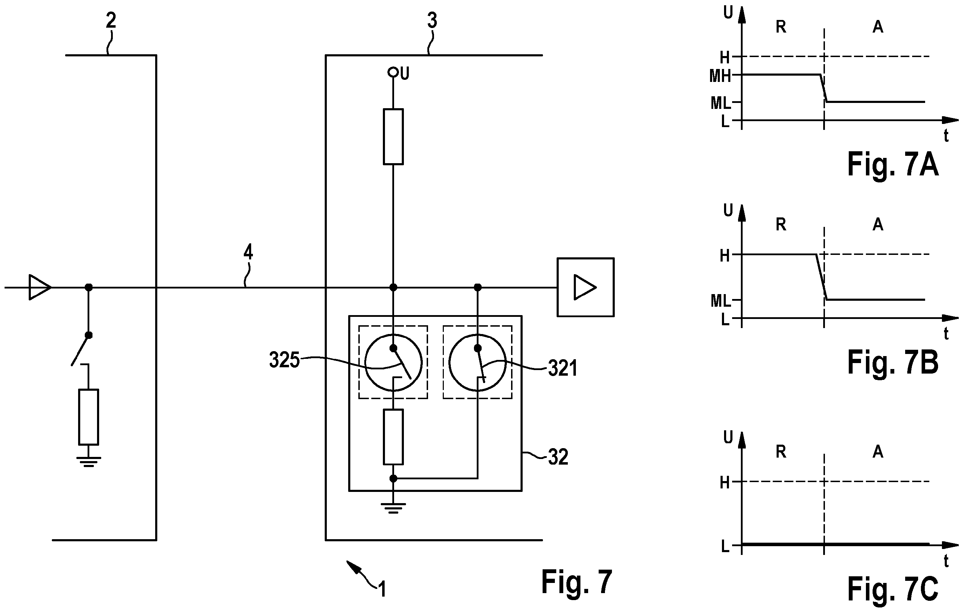

Die Fig. 7 zeigt eine weitere Alternative Ausführungsform einer Kombination der Fig. 4 und 5, in der sich zwei Zwischenpegel, MH, ML einmal in der Ruhelage R und einmal im angesteuerten Zustand A einstellen, wie die Fig. 7A mit einem Zeit-Potential-Diagramm zeigt. In der Ruhelage R ist die Übertragungsleitung 4 auf mittelhoch MH und im angesteuerten Zustand auf mittelniedrig ML. Dementsprechend ergibt sich durch die erfindungsgemäße Beschaltung mit der Mitteilungseinrichtung 321 und einem logischen Schließer 325 gemäß der Fig. 7B, dass sich der Pegel auf hoch H im Ruhezustand R bzw. bei einem Öffner 321 auf niedrig L im Ruhezustand R verändert. Im angesteuerten Zustand ist der Pegel somit entweder auf mittelniedrig oder auf niedrig. Somit lassen sich verschiedene Informationen, mit verschiedenen Pegelständen übermitteln. Alle Figuren zeigen lediglich schematische nicht maßstabsgerechte Darstellungen. Im Übrigen wird insbesondere auf die zeichnerische Darstellungen für die Erfindung als wesentlich verwiesen.

## Patentansprüche

1. Kommunikationssystem (1) mit einem Sender (2) und einem Empfänger (3) jeweils mit einer Schnittstelle (21, 31) und einer zwischen Sender (2) und Empfänger (3) angeordneten Übertragungsleitung (4),
wobei der Empfänger eine Prüf- und Auswerteschaltung (34) umfasst,
und der Sender (2) eine Sendeeinrichtung (22) und eine Diagnoseeinrichtung (23) umfasst,
wobei der Empfänger (3) eine Mitteilungseinrichtung (32) umfasst, die ausgebildet ist, zu detektieren, ob der Empfänger (3) von der Sendeeinrichtung (22) gesendete Signale richtig empfangen hat oder richtig interpretiert hat oder ob diese Signale richtig umgesetzt werden könnten oder konnten, wobei die Mitteilungseinreichung (32) einen Schalter (321) umfasst, der bezüglich der Übertragungsleitung (4) auf Seite der Masse geschaltet ist, wobei der Schalter (321) derart ausgebildet ist, dass er im ordnungsgemäßen, einwandfreien Zustand des Empfängers (3) offen ist,
wobei die Prüf- und Auswerteschaltung (34) ausgebildet ist, im Fall einer Fehlermeldung die Mitteilungseinrichtung (32) derart anzusteuern dass der Schalter (321) geschlossen wird,
wobei der Sender (2) eine Detektoreinrichtung (230) umfasst, die ausgebildet ist, Pegel von der Übertragungsleitung (4) aufzunehmen und an die Diagnoseeinrichtung (23) zu übermitteln, **dadurch gekennzeichnet, dass** die Mitteilungseinrichtung (32) einen Widerstand (328) umfasst, der einen Mittelpegel M zwischen einem Hochpegel und einem Niedrigpegel der Übertragungsleitung erzeugt.

2. Kommunikationssystem nach Anspruch 1, **dadurch gekennzeichnet, dass** die Diagnoseeinrichtung (23) die Detektoreinrichtung (230) umfasst.

3. Kommunikationssystem (1) nach Anspruch 1, **dadurch gekennzeichnet, dass** die Mitteilungseinrichtung (32) einen Schalter als Schließer (325) oder Öffner (320) auf Seite eines Potentials oder auf Seite einer Masse (E) umfasst.

4. Kommunikationssystem (1) nach einem der Ansprüche 1 bis 3, **dadurch gekennzeichnet, dass** der Sender (2) und/oder der Empfänger (3) eine erste und/oder zweite Einstelleinrichtung (328) zur Einstellung eines Hochpegels umfasst.

5. Kommunikationssystem (1) nach einem der Ansprüche 1 bis 4, **dadurch gekennzeichnet, dass** der Sender (2) und/oder der Empfänger eine dritte Einstelleinrichtung, (22) zur Einstellung des Zwischen-Pegels umfasst.

6. Kommunikationssystem (1) nach einem der Ansprüche 1 bis 5, **dadurch gekennzeichnet, dass** die Mitteilungseinrichtung (32) und die Sendeeinrichtung (22) jeweils einen Schalter zum Schalten auf eine Referenzspannung oder auf ein Referenzmassepotential umfasst.

7. Verfahren zum Betreiben eines Kommunikationssystems (1) nach einem der Ansprüche 1 bis 6, bei dem Empfänger (3) jeweils mittels der Mitteilungseinrichtung (32) in einem Abfrageschritt (A33) überprüft wird ob ein fehlerhafter Zustand im Empfänger (3) vorliegt, wobei bei einer Informationsübermittlung vom Sender (2) auf den Empfänger (3) von der Mitteilungseinrichtung (32) des Empfängers (3) die Informationsübermittlung verändert wird, wenn der fehlerhafte Zustand im Empfänger (3) vorliegt.

8. Verfahren nach Anspruch 7, **dadurch gekennzeichnet, dass** von der Mitteilungseinrichtung (32) die Information von einem "Niedrig"-Pegel auf einen "Hoch"--Pegel verändert wird.

9. Computerprogrammprodukt, das in einen Programmspeicher mit Programmbefehlen ladbar ist, um alle Schritte eines Verfahrens nach zumindest einem der Ansprüche 7 oder 8 auszuführen, wenn das Programm in einem Kommunikationssystem, insbesondere einem Sender und/oder einem Empfänger, ausgeführt wird.

## Claims

1. A communication system (1) having a transmitter (2) and a receiver (3) each with an interface (21, 31) and a transmission line (4) disposed between the transmitter (2) and receiver (3),
wherein the receiver comprises a test and evaluation circuit (34),
and the transmitter (2) comprises a transmission device (22) and a diagnostic device (23), wherein the receiver (3) comprises a messaging device (32) which is designed to detect whether the receiver (3) has correctly received or correctly interpreted signals transmitted by the transmission device (22) or whether these signals may be able or were able to be translated correctly,
wherein the messaging device (32) comprises a switch (321) which is switched to ground with respect to the transmission line (4),
wherein the switch (321) is designed so that it is open when the receiver (3) is in the proper unimpaired state,
wherein the test and evaluation circuit (34) is designed to actuate the messaging device (32) in the event of an error message in such a way that the switch (321) is closed, wherein the transmitter (2) comprises a detector device (230) which is designed to receive levels from the transmission line (4) and to communicate them to the diagnostic device (23), **characterised in that** the messaging device (32) comprise a resistor (328) which produces a middle level M between a high level and a low level of the transmission line.

2. The communication system as claimed in claim 1, **characterised in that** the diagnostic device (23) comprises a detector device (230).

3. The communication system (1) as claimed in claim 1, **characterised in that** the messaging device (32) comprises a switch as a closer (325) or opener (320) to a potential or to ground (E).

4. The communication system (1) as claimed in any one of claims 1 to 3, **characterised in that** the transmitter (2) and/or the receiver (3) comprises a first and/or second adjusting device (328) for adjusting a high level.

5. The communication system (1) as claimed in any one of claims 1 to 4, **characterised in that** the transmitter (2) and/or the receiver comprise(s) a third adjusting device (22) for adjusting the intermediate level.

6. The communication system (1) as claimed in any one of claims 1 to 5, **characterised in that** the messaging device (32) and the transmission device (22) each comprise a switch for switching to a reference voltage or to a reference ground potential.

7. A method for operating a communication system (1) as claimed in any one of claims 1 to 6, a check being made in the receiver (3), in each case by means of the messaging device (32), in an enquiry step (A33) whether an error state is present in the receiver (3), wherein in the case of an information communication from the transmitter (2) to the receiver (3) the information communication is changed by the messaging device (32) of the receiver (3) when the error state is present in the receiver (3).

8. The method as claimed in claim 7, **characterised in that** the messaging device (32) changes the information from a "low" level to a "high" level.

9. A computer program product which can be loaded into a program memory with program commands in order to carry out all steps of a method as claimed in at least one of claims 7 or 8 when the program is executed in a communication system, in particular a transmitter and/or a receiver.

## Revendications

1. Système de communication (1) ayant un émetteur (2) et un récepteur (3), ayant chacun une interface (21, 31) et une ligne de transmission (4) disposée entre l'émetteur (2) et le récepteur (3),
dans lequel le récepteur comporte un circuit de test et d'évaluation (34) et l'émetteur (2) comporte un dispositif d'émission (22) et un dispositif de diagnostic (23),
dans lequel le récepteur (3) comporte un dispositif de notification (32) qui est conçu pour détecter si le récepteur (3) a correctement reçu ou a correctement interprété des signaux envoyés par le dispositif d'émission (22), ou si ces signaux pourraient ou ont pu être correctement convertis,
dans lequel le dispositif de notification (32) comporte un commutateur (321) qui est relié au côté de la masse par rapport à la ligne de transmission (4),
dans lequel le commutateur (321) est conçu de telle sorte qu'il est ouvert lorsque le récepteur (3) est en parfait état de marche,
dans lequel le circuit de test et d'évaluation (34) est conçu pour ordonner, dans le cas d'un message d'erreur, au dispositif de notification (32) de fermer le commutateur (321),
dans lequel l'émetteur (2) comporte un dispositif de détection (230) qui est conçu pour capter un niveau de la ligne de transmission (4) et pour le transmettre au dispositif de diagnostic (23), **caractérisé en ce que** le dispositif de notification (32) comporte une résistance (328) qui génère un niveau moyen M entre un niveau haut et un niveau bas de la ligne de transmission.

2. Système de communication selon la revendication 1, **caractérisé en ce que** le dispositif de diagnostic (23) comporte le dispositif de détection (230).

3. Système de communication (1) selon la revendication 1, **caractérisé en ce que** le dispositif de notification (32) comporte un commutateur en tant que contact normalement ouvert (325) ou contact normalement fermé (320) du côté d'un potentiel ou du côté d'une masse (E).

4. Système de communication (1) selon l'une des revendications 1 à 3, **caractérisé en ce que** l'émetteur (2) et/ou le récepteur (3) comporte un premier et/ou un deuxième dispositif de réglage (328) pour régler un niveau haut.

5. Système de communication (1) selon l'une des revendications 1 à 4, **caractérisé en ce que** l'émetteur (2) et/ou le récepteur comporte un troisième dispositif de réglage (22) pour régler le niveau intermédiaire.

6. Système de communication (1) selon l'une des revendications 1 à 5, **caractérisé en ce que** le dispositif de notification (32) et le dispositif d'émission (22) comportent respectivement un commutateur pour basculer vers une tension de référence ou vers un potentiel de masse de référence.

7. Procédé pour faire fonctionner un système de communication (1) selon l'une des revendications 1 à 6,
dans lequel le récepteur (3) est respectivement contrôlé au moyen du dispositif de notification (32) lors d'une étape d'interrogation (A33) pour déterminer s'il existe un état de défaut dans le récepteur (3), dans lequel lors d'une transmission d'informations de l'émetteur (2) vers le récepteur (3) par le dispositif de notification (32) du récepteur (3), la transmission d'informations est modifiée lorsque le récepteur (3) est à l'état de défaut.

8. Procédé selon la revendication 7, **caractérisé en ce que** les informations sont changées par le dispositif de notification (32) d'un niveau "bas" à un niveau "haut".

9. Produit de programme informatique qui peut être chargé dans une mémoire de programme contenant des instructions de programme afin de mettre en oeuvre les étapes d'un procédé selon au moins une des revendications 7 ou 8, lorsque le programme est exécuté dans un système de communication, en particulier un émetteur et/ou un récepteur.
